# EUROPEAN PATENT APPLICATION

(11) **EP 4 607 345 A1**
(43) Date of publication of application: **27.08.2025**
(21) Application number: 23893575.3
(22) Date of filing: 31.10.2023
(51) Int. Cl.: G06F 9/455

(54) **APPLICATION MIGRATION METHOD AND ELECTRONIC DEVICE**

(30) Priority: 23.11.2022 CN 202211475512
(71) Applicant: Huawei Technologies Co., Ltd., Shenzhen, Guangdong 518129 (CN)
(72) Inventor: DING, Wen, Shenzhen, Guangdong 518129 (CN); LI, Yongbiao, Shenzhen, Guangdong 518129 (CN); GONG, Junsong, Shenzhen, Guangdong 518129 (CN)
(74) Representative: MERH-IP Matias Erny Reichl Hoffmann Patentanwälte PartG mbB
(86) International application number: PCT/CN2023/128365
(87) International publication number: WO 2024/109484

(57) **Abstract**

This application provides an application migration method and an electronic device, and relates to the field of terminal technologies. In this application, the electronic device migrates an application in a manner of compositing memory snapshots, to meet a requirement of a user for rapid application migration, and reduce application development difficulty. The method includes: A first electronic device determines, in response to a first operation of a user, that a first application needs to be migrated to a second electronic device, where the first application includes a first code object coded in a first programming language and/or a second code object coded in a second programming language; the first electronic device generates a first snapshot file corresponding to the first code object, and/or compiles a second code object in a first format into a second code object in a second format and generates a second snapshot file corresponding to the second code object in the second format; and then the first electronic device sends the first snapshot file and/or the second snapshot file to the second electronic device.

## Description

This application claims priority to Chinese Patent Application No. 202211475512.4, filed with the China National Intellectual Property Administration on November 23, 2022 and entitled "APPLICATION MIGRATION METHOD AND ELECTRONIC DEVICE", which is incorporated herein by reference in its entirety.

### TECHNICAL FIELD

Embodiments of this application relate to the field of terminal technologies, and in particular, to an application migration method and an electronic device.

### BACKGROUND

With development of terminal technologies, an application migration function is configured on an electronic device, to meet a requirement of a user for using a same application on different electronic devices. For example, in a process of editing a document on a mobile phone, the user switches to a computer to continue editing the document by using an application migration function of the device. For another example, in a process of watching a video on a computer, the user switches to a large-screen device to continue watching the video by using an application migration function of the device.

For example, after detecting an operation that the user indicates to migrate an application, an electronic device A generates current status node information of the application, and sends the status node information to an electronic device B to which the user indicates to migrate the application. Then, the electronic device B restores a program runtime environment of the migrated application based on the received status node information, so that the user continues to use the application.

However, in an application migration process, an electronic device needs to restore a program runtime environment of an application based on obtained status node information. Consequently, a speed of the application migration process is low, and a user waits for a long period of time.

### SUMMARY

To resolve the foregoing technical problem, embodiments of this application provide an application migration method and an electronic device. According to technical solutions provided in embodiments of this application, the electronic device migrates an application in a manner of compositing memory snapshots, to meet a requirement of a user for rapid application migration, and reduce application development difficulty.

To achieve the foregoing technical objective, embodiments of this application provide the following technical solutions.

According to a first aspect, an application migration method is provided, and is applied to a first electronic device. The method includes: determining, in response to a first operation of a user, to migrate a first application to a second electronic device, where the first application includes a first code object coded in a first programming language and/or a second code object coded in a second programming language; generating a first snapshot file corresponding to the first code object, and/or compiling a second code object in a first format into a second code object in a second format and generating a second snapshot file corresponding to the second code object in the second format; and sending the first snapshot file and/or the second snapshot file to the second electronic device.

The first operation is, for example, a plurality of operations such as an operation on a preset control, a gesture operation, and a voice operation. For example, the first electronic device detects an operation performed by the user on an application migration control, and determines that the user indicates to migrate the first application corresponding to the application migration control to the second electronic device.

Optionally, the second electronic device is an electronic device to which the first electronic device migrates the first application by default. Alternatively, the second electronic device is an electronic device selected by the user for migrating the first application.

In some embodiments, the first programming language is, for example, a high-level programming language like a TS/JS language. The second programming language is, for example, a low-level programming language (Native) like C/C++. Optionally, the first code object is, for example, a code object coded in a TS/JS language, and the second code object is, for example, a code object coded in a native language.

In this way, during application migration based on a snapshot file, the second electronic device can directly read a code object from the snapshot file, so that time overheads of creating the code object are saved, to accelerate startup of a virtual machine. Compared with application migration based on status node information in the conventional technology, in the application migration method provided in this application, the first electronic device does not need to record detailed information about a to-be-migrated page, so that a migration rate is effectively improved, and application migration efficiency is improved.

In addition, compared with application migration based on status node information in the conventional technology, in the application migration method provided in this application, the second electronic device does not need to restore a page status based on the status node information. In this way, an application can be migrated on any node in a manner of a snapshot file, and application migration efficiency can be improved.

Finally, in the conventional technology, in order to complete migration of an application, in an application development process, a developer needs to develop, based on an application framework and a distributed scenario, a corresponding interface of the application framework for each page that may need to be migrated in the application. According to the application migration method provided in this application, a unified distributed application development framework is established in a manner of a high-level programming language composite snapshot, and the first application can be migrated based on a serialization interface and a deserialization interface. This effectively reduces application development difficulty.

According to the first aspect, the first snapshot file further includes first data written in the first programming language, and the second snapshot file further includes second data written in the second programming language.

For example, there is primitive data that remains unchanged before and after migration of the first application. For the primitive data that remains unchanged before and after the migration, the first electronic device may directly write the data into a snapshot file in a manner of an input stream.

According to any one of the first aspect or the foregoing implementations of the first aspect, before the generating a first snapshot file corresponding to the first code object, the method further includes: determining the first code object corresponding to a first interface currently displayed by the first application.

For example, the first application may be coded in one or more programming languages. After determining to perform application migration, the first electronic device may determine the first code object included in a current interface, to generate the corresponding first snapshot file.

According to any one of the first aspect or the foregoing implementations of the first aspect, the compiling a second code object in a first format into a second code object in a second format includes: compiling the second code object in the first format into a second code object in a WebAssembly WASM format by using a first tool.

For example, for a native language, there is no virtual machine similar to that for a high-level language to allocate and manage a code object, and code objects in a native runtime environment have different addresses in different processes of different electronic devices. In this case, a new address of the code object in the native runtime environment cannot be found through redirecting based on object information stored in a snapshot file during deserialization. Therefore, the first electronic device cannot directly generate, by using a snapshot technology, a snapshot file corresponding to a code object coded in the native language. In this case, the first electronic device may first compile the code object coded in the native language into a code object in a WASM format, and then generate, by using the snapshot technology, a snapshot file corresponding to the compiled code object in the WASM format.

According to any one of the first aspect or the foregoing implementations of the first aspect, before the compiling a second code object in a first format into a second code object in a second format, the method further includes: determining the second code object in the first format corresponding to the first interface currently displayed by the first application.

For example, the first application may be coded in one or more programming languages. After determining to perform application migration, the first electronic device may determine the second code object included in the current interface, to generate the corresponding second snapshot file.

According to any one of the first aspect or the foregoing implementations of the first aspect, the first snapshot file is a Snapshot snapshot, and the second snapshot file is a WASM Snapshot snapshot.

According to any one of the first aspect or the foregoing implementations of the first aspect, the first snapshot file further includes a first reference relationship of the first code object to the second code object in the second format, and the second snapshot file further includes a second reference relationship of the second code object in the second format to the first code object.

In this way, a reference relationship is stored, and after subsequently receiving a snapshot file sent by the first electronic device, the second electronic device may restore the reference relationship, thereby ensuring normal running of the first application.

According to a second aspect, an application migration method is provided, and is applied to a second electronic device. The method includes: receiving a first snapshot file and/or a second snapshot file sent by a first electronic device, where the first file snapshot and the second file snapshot correspond to a first application in the first electronic device; decoding the first snapshot file to obtain a first code object, and/or decoding the second snapshot file to obtain a second code object, where the first code object and the second code object correspond to different coding languages; and displaying the first application.

In this way, after receiving a snapshot file, the second electronic device may directly decompress the snapshot file in a deserialization manner, to restore a runtime environment of the first application and display the first application. In this way, the second electronic device does not need to restore a page status based on status node information. In this way, an application can be migrated on any node in a manner of a snapshot file, and application migration efficiency can be improved.

According to the second aspect, before the displaying the first application, the method further includes: decoding the first snapshot file to obtain first data written in a first programming language, and/or decoding the second snapshot file to obtain second data written in a second programming language.

According to any one of the second aspect or the foregoing implementations of the second aspect, snapshot files received by the first electronic device include the first snapshot file and the second snapshot file, the second snapshot file includes a second code object in a second format, and before the displaying the first application, the method further includes: reconstructing a first reference relationship of the first code object included in the first snapshot file to the second code object in the second format, and reconstructing a second reference relationship of the second code object that is in the second format and that is included in the second snapshot file to the first code object.

According to any one of the second aspect or the foregoing implementations of the second aspect, the first snapshot file is a Snapshot snapshot, and the second snapshot file is a WebAssembly WASM Snapshot snapshot.

For technical effects corresponding to any one of the second aspect and the implementations of the second aspect, refer to the technical effects corresponding to any one of the first aspect and the implementations of the first aspect. Details are not described herein again.

According to a third aspect, an electronic device is provided. The electronic device includes a processor and a memory. The memory is coupled to the processor, the memory is configured to store computer program code, and the computer program code includes computer instructions. When the processor reads the computer instructions from the memory, the electronic device is enabled to perform the following steps: determining, in response to a first operation of a user, to migrate a first application to a second electronic device, where the first application includes a first code object coded in a first programming language and/or a second code object coded in a second programming language; generating a first snapshot file corresponding to the first code object, and/or compiling a second code object in a first format into a second code object in a second format and generating a second snapshot file corresponding to the second code object in the second format; and sending the first snapshot file and/or the second snapshot file to the second electronic device.

According to the third aspect, the first snapshot file further includes first data written in the first programming language, and the second snapshot file further includes second data written in the second programming language.

According to any one of the third aspect or the foregoing implementations of the third aspect, when the processor reads the computer instructions from the memory, the electronic device is further enabled to perform the following step: determining the first code object corresponding to a first interface currently displayed by the first application.

According to any one of the third aspect or the foregoing implementations of the third aspect, the compiling a second code object in a first format into a second code object in a second format includes: compiling the second code object in the first format into a second code object in a WebAssembly WASM format by using a first tool.

According to any one of the third aspect or the foregoing implementations of the third aspect, when the processor reads the computer instructions from the memory, the electronic device is further enabled to perform the following step: determining the second code object in the first format corresponding to the first interface currently displayed by the first application.

According to any one of the third aspect or the foregoing implementations of the third aspect, the first snapshot file is a Snapshot snapshot, and the second snapshot file is a WASM Snapshot snapshot.

According to any one of the third aspect or the foregoing implementations of the third aspect, the first snapshot file further includes a first reference relationship of the first code object to the second code object in the second format, and the second snapshot file further includes a second reference relationship of the second code object in the second format to the first code object.

For technical effects corresponding to any one of the third aspect and the implementations of the third aspect, refer to the technical effects corresponding to any one of the first aspect and the implementations of the first aspect. Details are not described herein again.

According to a fourth aspect, an electronic device is provided. The electronic device includes a processor, a memory, and a display. The memory, the display, and the processor are coupled, the memory is configured to store computer program code, and the computer program code includes computer instructions. When the processor reads the computer instructions from the memory, the electronic device is enabled to perform the following steps: receiving a first snapshot file and/or a second snapshot file sent by a first electronic device, where the first file snapshot and the second file snapshot correspond to a first application in the first electronic device; decoding the first snapshot file to obtain a first code object, and/or decoding the second snapshot file to obtain a second code object, where the first code object and the second code object correspond to different coding languages; and displaying the first application.

According to the fourth aspect, before the displaying the first application, when the processor reads the computer instructions from the memory, the electronic device is further enabled to perform the following steps: decoding the first snapshot file to obtain first data written in the first programming language, and/or decoding the second snapshot file to obtain second data written in the second programming language.

According to any one of the fourth aspect or the foregoing implementations of the fourth aspect, snapshot files received by the first electronic device include the first snapshot file and the second snapshot file, the second snapshot file includes a second code object in a second format, and when the processor reads the computer instructions from the memory, the electronic device is further enabled to perform the following steps: reconstructing a first reference relationship of the first code object included in the first snapshot file to the second code object in the second format, and reconstructing a second reference relationship of the second code object that is in the second format and that is included in the second snapshot file to the first code object.

According to any one of the fourth aspect or the foregoing implementations of the fourth aspect, the first snapshot file is a Snapshot snapshot, and the second snapshot file is a WASM Snapshot snapshot.

For technical effects corresponding to any one of the fourth aspect and the implementations of the fourth aspect, refer to the technical effects corresponding to any one of the second aspect and the implementations of the second aspect. Details are not described herein again.

According to a fifth aspect, an embodiment of this application provides an electronic device. The electronic device has a function of implementing the application migration method according to any one of the first aspect and the possible implementations of the first aspect; or the electronic device has a function of implementing the application migration method according to any one of the second aspect and the possible implementations of the second aspect. The function may be implemented by hardware, or may be implemented by hardware executing corresponding software. The hardware or the software includes one or more modules corresponding to the function.

For technical effects corresponding to any one of the fifth aspect and the implementations of the fifth aspect, refer to the technical effects corresponding to any one of the first aspect and the implementations of the first aspect. Details are not described herein again.

According to a sixth aspect, an embodiment of this application provides a computer-readable storage medium. The computer-readable storage medium stores a computer program (which may also be referred to as instructions or code). When the computer program is executed by an electronic device, the electronic device is enabled to perform the method according to any one of the first aspect or the implementations of the first aspect, or the electronic device is enabled to perform the method according to any one of the second aspect or the implementations of the second aspect.

For technical effects corresponding to any one of the sixth aspect and the implementations of the sixth aspect, refer to the technical effects corresponding to any one of the first aspect and the implementations of the first aspect. Details are not described herein again.

According to a seventh aspect, an embodiment of this application provides a computer program product. When the computer program product runs on an electronic device, the electronic device is enabled to perform the method according to any one of the first aspect or the implementations of the first aspect, or the electronic device is enabled to perform the method according to any one of the second aspect or the implementations of the second aspect.

For technical effects corresponding to any one of the seventh aspect and the implementations of the seventh aspect, refer to the technical effects corresponding to any one of the first aspect and the implementations of the first aspect. Details are not described herein again.

According to an eighth aspect, an embodiment of this application provides a circuit system. The circuit system includes a processing circuit, and the processing circuit is configured to perform the method according to any one of the first aspect or the implementations of the first aspect; or the processing circuit is configured to perform the method according to any one of the second aspect or the implementations of the second aspect.

For technical effects corresponding to any one of the eighth aspect and the implementations of the eighth aspect, refer to the technical effects corresponding to any one of the first aspect and the implementations of the first aspect. Details are not described herein again.

According to a ninth aspect, an embodiment of this application provides a chip system, including at least one processor and at least one interface circuit. The at least one interface circuit is configured to: perform a transceiver function, and send instructions to the at least one processor. When the at least one processor executes the instructions, the at least one processor performs the method according to any one of the first aspect or the implementations of the first aspect; or when the at least one processor executes the instructions, the at least one processor performs the method according to any one of the second aspect or the implementations of the second aspect.

For technical effects corresponding to any one of the ninth aspect and the implementations of the ninth aspect, refer to the technical effects corresponding to any one of the first aspect and the implementations of the first aspect. Details are not described herein again.

### BRIEF DESCRIPTION OF DRAWINGS

FIG. 1 is a diagram of an application migration scenario in a conventional technology according to an embodiment of this application;
FIG. 2 is a diagram of a communication system to which an application migration method is applied according to an embodiment of this application;
FIG. 3 is a diagram of a hardware structure of a first electronic device according to an embodiment of this application;
FIG. 4A-1 and FIG. 4A-2 are a diagram 1 of an application migration scenario according to an embodiment of this application;
FIG. 4B-1 and FIG. 4B-2 are a diagram 2 of an application migration scenario according to an embodiment of this application;

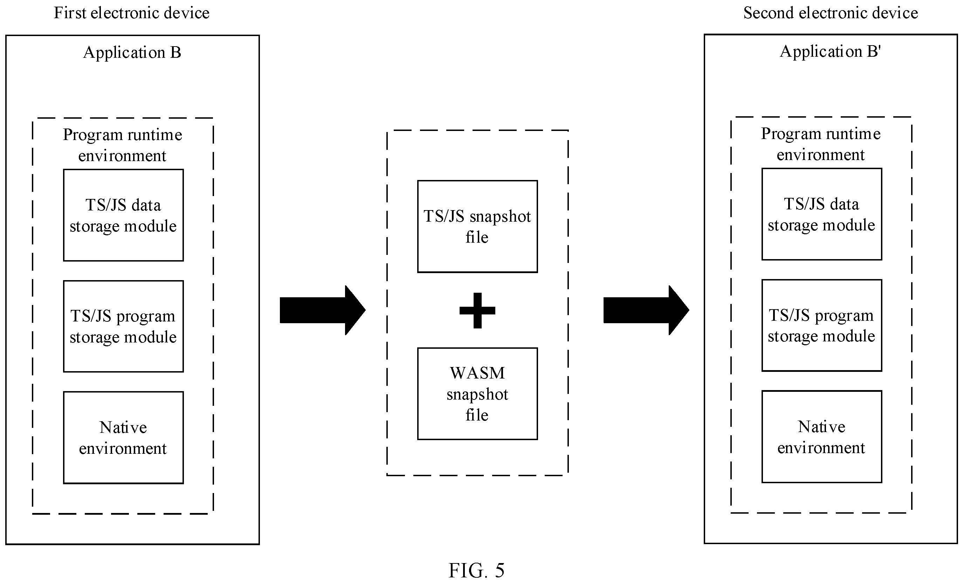

FIG. 5 is a diagram 1 of a snapshot file generation and transmission scenario in an application migration process according to an embodiment of this application;

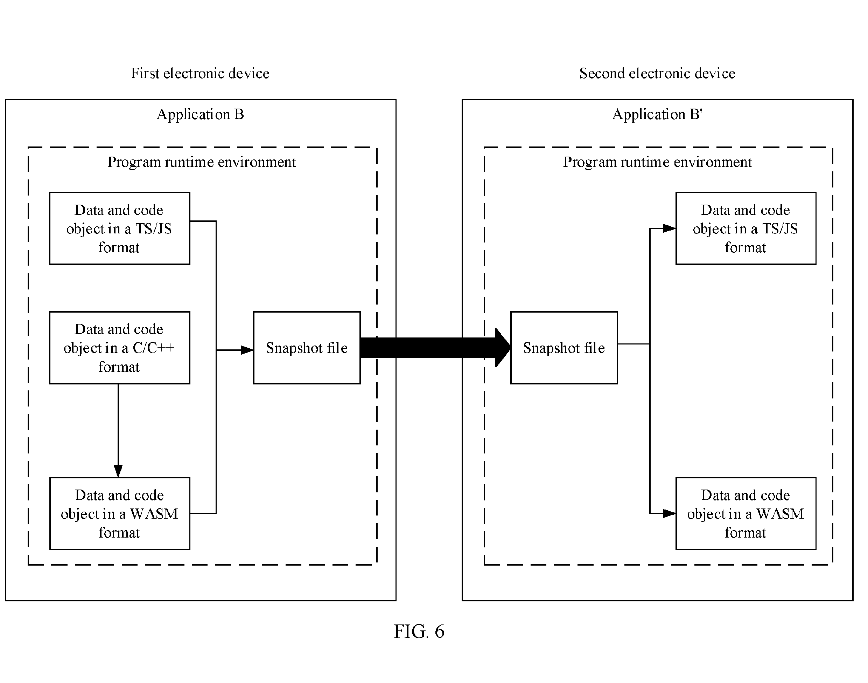

FIG. 6 is a diagram 2 of a snapshot file generation and transmission scenario in an application migration process according to an embodiment of this application;

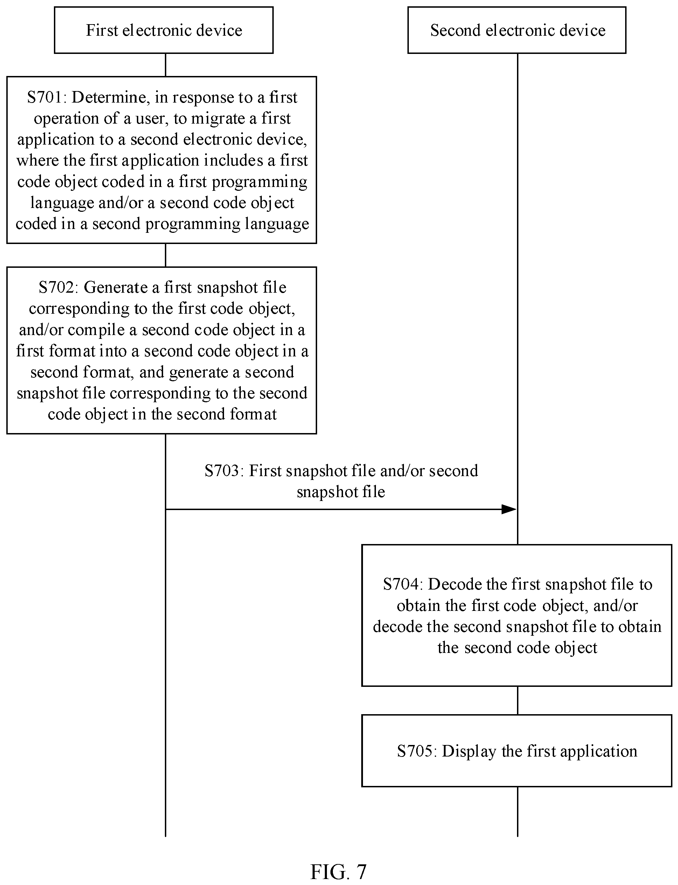

FIG. 7 is a schematic flowchart of an application migration method according to an embodiment of this application;

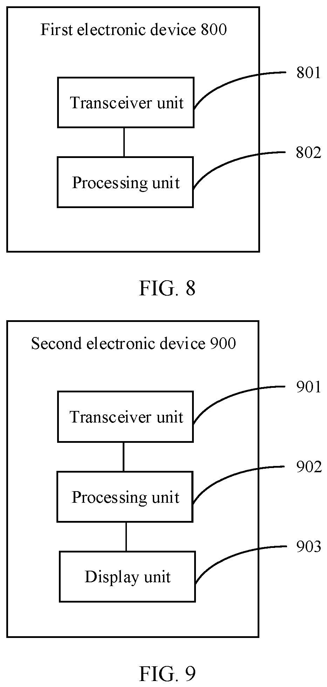

FIG. 8 is a diagram of a structure of a first electronic device according to an embodiment of this application; and
FIG. 9 is a diagram of a structure of a second electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely for the purpose of describing specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or at least two (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes a direct connection and an indirect connection, unless otherwise stated. "First" and "second" are merely intended for a purpose of description, and shall not be understood as an indication or implication of relative importance or implicit indication of a quantity of indicated technical features.

In embodiments of this application, the term like "example" or "for example" is used to represent giving an example, an illustration, or a description. Any embodiment or design scheme described by using "example" or "for example" in embodiments of this application should not be construed as being more preferred or more advantageous than another embodiment or design scheme. Exactly, use of the term "example", "for example", or the like is intended to present a related concept in a specific manner.

In some embodiments, an electronic device may migrate, by using an application migration function, a running status of an application at a moment to different electronic devices. In this way, a user can seamlessly migrate and use an application on different electronic devices.

For example, in a process of editing a document on a mobile phone, the user switches to a computer to continue editing the document by using an application migration function of the device. For another example, in a process of watching a video on a computer, the user switches to a large-screen device to continue watching the video by using an application migration function of the device. For still another example, after planning a navigation route in a navigation application on a mobile phone, the user switches to use an in-vehicle infotainment system by using an application migration function of the device to continue to view the planned navigation route.

Currently, an electronic device records status node information of an application, to implement migration of the application between different electronic devices. The status node information includes, for example, related information about a running status of the application at a moment. Optionally, the application is configured with a plurality of abilities (ability). Each ability may include a plurality of interfaces, and the status node information includes information about a plurality of status nodes corresponding to the plurality of interfaces.

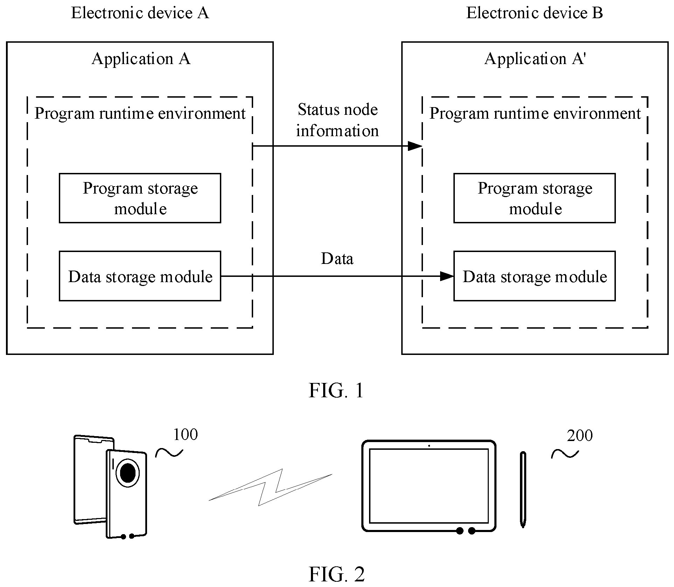

For example, as shown in FIG. 1, an electronic device A may record, in response to an operation that a user indicates to migrate an application A to an electronic device B, status node information of a plurality of interfaces included in an ability that is run by the application A at a current moment. Then, as shown in FIG. 1, the electronic device A sends the status node information to the electronic device B. After receiving the status node information, the electronic device B starts an application A' and reloads a runtime environment of the application A' based on the status node information. In addition, in a process of migrating the application A, the electronic device A further sends, to the electronic device B, user data generated when the user operates the application A on the electronic device A, and the electronic device B continues to display a page of the application A' on the electronic device B based on the reloaded application runtime environment and the obtained user data, to implement migration of the application A.

It should be noted that, for ease of differentiation, in FIG. 1, the application A' in the electronic device B is used to represent the migrated application A, and the application A' and the application A are a same application or different versions of a same application running in different electronic devices.

In addition, in different operating systems, the ability configured for the application may be described as different names. For example, the ability may be referred to as an "ability" in some operating systems, and the ability may be referred to as an "activity" in some other operating systems. In embodiments of this application, the "ability" is used as an example to describe status node information of an interface. It should be understood that the ability configured for the application may be further described in another manner. This is not limited in embodiments of this application.

It may be learned that, first, migration of an application is completed based on status node information, and an electronic device before migration needs to record status node information of a plurality of interfaces of the application. In this case, if a running ability of an application corresponds to dozens of status nodes, the electronic device also needs to record information about the dozens of status nodes. Recording of the status node information increases power consumption of the electronic device.

Second, because migration of the application is implemented based on the status node information, the application needs to run on a specific node during application migration, to obtain status node information corresponding to the node. In other words, migration of the application can be implemented only when the application is on the specific status node. If the application runs between two nodes, migration of the application cannot be implemented.

In addition, after obtaining the status node information, an electronic device to which the application is migrated needs to reload a runtime environment of the application, to restore a page status of the application and complete migration of the application. For example, the electronic device to which the application is migrated re-runs the application based on the obtained status node information, and indicates to run the application to a migrated status node, to complete restoration of the page status of the application. Page restoration of the application also leads to a slow application migration speed and low efficiency.

Finally, in order to implement migration of the application, in an application development process, a developer needs to develop, based on an application framework and a distributed scenario, a corresponding interface of the application framework for each page that may need to be migrated in the application. This leads to high development complexity and difficulty.

Therefore, an embodiment of this application provides an application migration method, to migrate an application between different electronic devices in a manner of compositing memory snapshots (Snapshot). In this way, application migration efficiency is improved, and application development difficulty is reduced.

FIG. 2 is a diagram of a communication system to which an application migration method is applied according to an embodiment of this application. As shown in FIG. 2, the communication system includes a first electronic device 100 and a second electronic device 200.

Optionally, the first electronic device 100 or the second electronic device 200 may be, for example, a terminal device like a mobile phone, a tablet computer, a notebook computer, an ultra-mobile personal computer (ultra-mobile personal computer, UMPC), a netbook, a personal digital assistant (personal digital assistant, PDA), a vehiclemounted terminal, a wearable device, or an artificial intelligence (artificial intelligence, AI) device. An operating system installed in the first electronic device 100 includes but is not limited to iOS^{®}, Android^{®}, HarmonyOS^{®}, Windows^{®}, Linux^{®}, or another operating system. A specific type of the first electronic device 100 or the second electronic device 200 and an operating system installed on the first electronic device 100 or the second electronic device 200 are not limited in this application.

In some embodiments, a wireless communication connection is established between the first electronic device 100 and the second electronic device 200. A wireless communication technology for establishing the wireless communication connection includes but is not limited to at least one of the following: Bluetooth (Bluetooth, BT) (for example, conventional Bluetooth or Bluetooth low energy (Bluetooth low energy, BLE) Bluetooth), a wireless local area network (wireless local area network, WLAN) (for example, a wireless fidelity (wireless fidelity, Wi-Fi) network), near field communication (near field communication, NFC), Zigbee (Zigbee), frequency modulation (frequency modulation, FM), infrared (infrared, IR), and the like.

Optionally, the first electronic device 100 and the second electronic device 200 may alternatively establish a wireless communication connection by using a third-party device in a local area network. The third-party device is, for example, a router, a gateway, or a server.

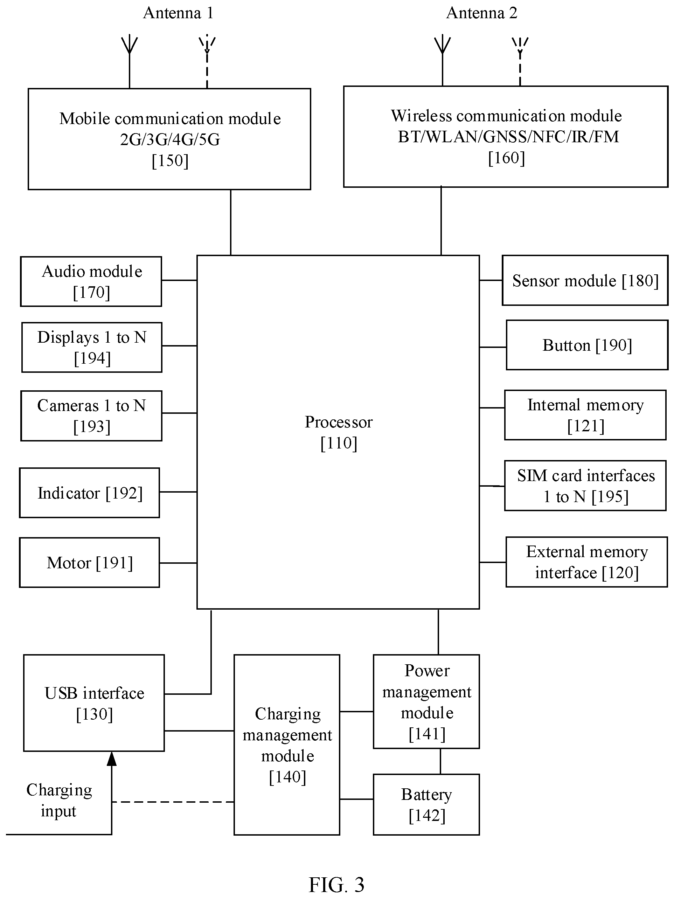

Optionally, the first electronic device 100 and the second electronic device 200 in embodiments of this application may be implemented by using different devices, and the different devices may have same, similar, or different hardware structures, for example, a hardware structure shown in FIG. 3.

For example, an example in which the first electronic device 100 has the hardware structure shown in FIG. 3 is used to describe the hardware structure shown in FIG. 3.

For example, FIG. 3 is a diagram of a structure of the first electronic device 100.

The first electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the first electronic device 100. In some other embodiments of this application, the first electronic device 100 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction fetch and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to a touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the first electronic device 100.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first electronic device 100. The processor 110 communicates with the display 194 through the DSI interface, to implement a display function of the first electronic device 100.

The USB interface 130 is an interface conforming to the USB standard specification, and may be specifically a mini USB interface, a micro USB interface, a USB Type-C interface, or the like. The USB interface 130 may be configured to connect to the charger to charge the first electronic device 100, or may be configured to transmit data between the first electronic device 100 and a peripheral device, or may be configured to connect to a headset for playing audio through the headset. The interface may be further configured to connect to another first electronic device, for example, an AR device.

It may be understood that, an interface connection relationship between the modules shown in this embodiment of this application is merely an example for description, and does not constitute a limitation on the structure of the first electronic device 100. In some other embodiments of this application, the first electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. The charging management module 140 may further supply power to the first electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the first electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 can provide a wireless communication solution that is applied to the first electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the first electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first electronic device 100 implements a display function by using the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs that execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the first electronic device 100 may include one or N displays 194, where N is a positive integer greater than 1.

In some embodiments, in a process of running a first application, the first electronic device 100 determines, in response to an operation performed by a user on the display 194, that the user indicates to migrate the first application to the second electronic device 200. The first electronic device 100 may use a manner of compositing snapshots, to generate a corresponding Snapshot snapshot file in a preset manner based on a programming language of the first application. Then, the first electronic device 100 sends the Snapshot snapshot file to the second electronic device by using the wireless communication module 160. Correspondingly, after obtaining the Snapshot snapshot file, the second electronic device 200 may parse the Snapshot snapshot file, to quickly complete migration of the first application.

The camera 193 is configured to capture a static image or a video. An optical image of an object is generated by using a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 may include one or N cameras 193, where N is a positive integer greater than 1.

The external memory interface 120 may be configured to connect to an external memory card, for example, a micro SD card, to extend a storage capability of the first electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like that are created during use of the first electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the first electronic device 100 and data processing.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110. The first electronic device 100 may use the audio module 170 to implement, for example, music playing or recording. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The first electronic device 100 may receive a button input, and generate a button signal input related to a user setting and function control of the first electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the first electronic device 100.

The following describes in detail the application migration method provided in this embodiment of this application by using an example in which the first electronic device 100 is a first electronic device, the second electronic device 200 is a second electronic device, and the first electronic device migrates the first application to the second electronic device.

In some embodiments, in a process of running the first application in the foreground or running the first application in the background, the first electronic device detects a preset operation of the user, and may determine that the user indicates to migrate the first application. Optionally, the preset operation includes, for example, a plurality of operations such as an operation on a preset control, a gesture operation, and a voice operation. A foreground application is an application corresponding to an interface currently displayed on a display of an electronic device.

For example, as shown in FIG. 4A-1 and FIG. 4A-2, in a process of displaying the first application, the first electronic device 100 detects an operation performed by the user on an application migration control 41, and determines that the user indicates to migrate the currently displayed first application. Then, the first electronic device 100 may migrate the first application to the second electronic device 200. Optionally, the second electronic device 200 is an electronic device to which the first electronic device 100 migrates the first application by default. Alternatively, the second electronic device 200 is an electronic device selected by the user for migrating the first application. For example, the first electronic device 100 may display a migration device selection interface, and display, on the migration device selection interface, an electronic device that establishes a communication connection to the first electronic device 100 and on which the first application is installed. In response to an operation of the user for selecting an electronic device, the first electronic device 100 may migrate the first application to the second electronic device 200 selected by the user.

For another example, as shown in FIG. 4B-1 and FIG. 4B-2, the first electronic device 100 displays a multi-task interface in response to an operation of the user. Cards corresponding to applications running in the background of the first electronic device 100 are displayed on the multi-task interface. Optionally, a migration control is displayed on each card, and the user may indicate, by using the migration control, to migrate a corresponding application. For example, the first electronic device 100 detects an operation performed by the user on a migration control 42, and determines that the user indicates to migrate the first application corresponding to the migration control 42. Then, the first electronic device 100 may migrate the first application to the second electronic device 200.

In some embodiments, after determining to migrate the first application, the first electronic device determines a code object and data of the first application at a current moment, performs serialization processing on the code object and the data by using a snapshot technology, and encodes the code object and the data into a binary file, to facilitate storage and transmission. Optionally, the binary file is, for example, a snapshot file. Then, the first electronic device sends the snapshot file to the second electronic device. Correspondingly, the second electronic device receives the snapshot file. Then, the second electronic device performs deserialization processing on the snapshot file, decodes the snapshot file, and reconstructs the code object and the data, to restore a runtime environment of the first application and complete migration of the first application. Optionally, the first application is written in a high-level programming language and/or a low-level programming language (Native). The high-level programming language is, for example, TypeScript (TS) or JavaScript (JS), and the native is, for example, C/C++. In this case, the runtime environment of the first application includes a TS/JS runtime environment and/or a native runtime environment, the TS/JS runtime environment includes a code object and data that are coded in the TS/JS language, and the native runtime environment includes a code object and data that are coded in the native language.

For example, as shown in FIG. 5, the first application (for example, an application B) includes a TS/JS data storage module (TS/JS Data), a TS/JS program storage module (TS/JS Code), and a native environment (Native Env). The TS/JS Data, the TS/JS Code, and the Native Env are used to run and manage content written in the TS/JS language and the native language in the application B, such as code objects and data.

In some embodiments, before and after migration of the first application, content written in a programming language may be divided into two parts.

One part is primitive (primitive) data that remains unchanged before and after the migration, for example, data that is of the first application and that is determined by the first electronic device at a moment at which the first electronic device determines to migrate the first application. For the primitive data that remains unchanged before and after the migration, the first electronic device may directly write the data into the snapshot file in a manner of an input stream.

Optionally, the TS/JS language is used as an example, and types of primitive data are basic data types, for example, including the following six types: number (number), string (string), null (null), undefined (undefined), Boolean (Boolean), and symbol (symbol).

The other part is a code object (object) of the first application. Optionally, after detecting an operation that the user indicates to migrate the first application, the electronic device may determine a display interface of the to-be-migrated first application, where the display interface corresponds to a plurality of code objects. Different code objects in a virtual machine correspond to different memory regions, and the memory region may store data used to display the display interface of the first application. An electronic device traverses from a root code object to a subcode object based on a tree structure, and may determine a plurality of code objects.

Optionally, when the root code object is a code object coded in the TS/JS language, the subcode object of the root code object is a code object coded in the TS/JS language. When the root code object is a code object coded in the native language, the subcode object of the root code object is a code object coded in the native language.

Optionally, a code object coded in the TS/JS language may reference a code object coded in the native language, and a code object coded in the native language may reference a code object coded in the TS/JS language.

In some embodiments, for the TS/JS language, a code object is a code object allocated and managed by the virtual machine, and the code object may have a reference to another code object. A reference relationship of the code object is implemented by recording, in the code object, an address of the code object referenced by the code object.

In some examples, the electronic device performs serialization processing on the TS/JS code object by using the snapshot technology. In a TS/JS runtime environment, each time the virtual machine is initialized, some virtual machine built-in objects are fixedly created. In this case, during serialization processing of a code object, the electronic device may generate a snapshot file from these virtual machine built-in objects by using the snapshot technology.

For example, as shown in FIG. 5, the electronic device determines that the root code object is a TS/JS code object, and then may determine a TS/JS virtual machine corresponding to the root code object, to generate a snapshot file, for example, a TS/JS snapshot file, of built-in objects of the TS/JS virtual machine.

In some examples, as described above, the code object coded in the TS/JS language may reference the code object coded in the native language. Therefore, in a process of generating the TS/JS snapshot file, the first electronic device further needs to store a reference relationship between code objects in the snapshot file, so that the second electronic device restores a program runtime environment based on the reference relationship between the code objects in a subsequent deserialization process.

In some other embodiments, for the native language, there is no virtual machine similar to that for a high-level language to allocate and manage a code object, and code objects in a native runtime environment have different addresses in different processes of different electronic devices. In this case, a new address of the code object in the native runtime environment cannot be found through redirecting based on object information stored in a snapshot file during deserialization. Therefore, the first electronic device cannot directly generate, by using the snapshot technology, a snapshot file corresponding to a code object coded in the native language.

Optionally, after determining that a code object is a code object coded in the native language, the first electronic device may first compile the code object into a WebAssembly (WebAssembly, WAMS) format, and a file in the WAMS format may run in a WAMS virtual machine. In this case, a format of native code is converted, so that the native code indirectly runs in the WAMS virtual machine, to execute a corresponding code object in the virtual machine. Then, the first electronic device may generate a snapshot file from the code object in the WAMS format by using the snapshot technology.

Optionally, the native language includes, for example, C/C++ code. The first electronic device may compile, into the WASM format by using a compiler, C/C++ code on which program running in the first application depends. For example, as shown in FIG. 5, the first electronic device generates, by using the compiler, a WAMS snapshot corresponding to a code object in a C/C++ format in the application B. Optionally, the compiler is, for example, an Emscripten tool. This is not limited in embodiments of this application.

For example, as shown in FIG. 6, the first electronic device directly generates a snapshot file from data and a code object in the TS/JS format in the application B by using the snapshot technology. In addition, the first electronic device first compiles data and a code object in the C/C++ format in the application B into data and code object in the WASM format by using the Emscripten tool. Then, the first electronic device generates a snapshot file from the data and the code object in the WASM format by using the snapshot technology.

In some examples, as described above, a code object coded in the native language may reference a code object coded in the TS/JS language. Therefore, in a process of compiling a code object coded in the native language into a code object in the WASM format and generating a snapshot file, the first electronic device may further generate, based on a reference relationship of a part of the code object coded in the native language to the code object coded in the TS/JS language, a reference relationship of the code object in the WASM format corresponding to the part of the code object coded in the native language to the code object coded in the TS/JS language. In addition, the first electronic device stores the reference relationship in the snapshot file. Therefore, the second electronic device may restore the program runtime environment based on the reference relationship in a process of performing deserialization processing on the snapshot file after receiving the snapshot file subsequently.

In addition, as described above, the first electronic device may also generate a reference relationship of a part of the code object coded in the TS/JS language to the code object coded in the native language. Correspondingly, in a process of generating a file snapshot, the first electronic device generates a reference relationship of the part of the code object coded in the TS/JS language to the code object in the WASM format, and stores the reference relationship in the snapshot file.

In this way, the first electronic device completes generation of the snapshot file corresponding to the data and the code object in the first application in the foregoing manner. Then, the first electronic device may complete migration of the first application by using the snapshot file.

For example, as shown in FIG. 5, after generating the TS/JS snapshot file and the WAMS snapshot file, the first electronic device may send the TS/JS snapshot file and the WAMS snapshot file to the second electronic device to which the user indicates to migrate the application B.

Optionally, for example, the first application includes only the TS/JS language. In this case, the snapshot file sent by the first electronic device to the second electronic device may include only a Snapshot snapshot file corresponding to data and a code object in the TS/JS language. Alternatively, the first application includes only the native language. In this case, the snapshot file sent by the first electronic device to the second electronic device may include only a Snapshot snapshot file corresponding to data and a code object in the WAMS format.

Corresponding to FIG. 5, as shown in FIG. 6, after receiving the snapshot file sent by the first electronic device, the second electronic device loads and parses the snapshot file in a deserialization manner, to reload a runtime environment of an application B'.

It should be understood that the application B' represents the migrated application B, and the application B' and the application B are a same application or different versions of a same application running in different electronic devices.

In some embodiments, in a process of performing deserialization processing on the snapshot file, the second electronic device reloads the data and the code object in the TS/JS format into the TS/JS virtual machine, and reloads the data and the code object in the WASM format into the WASM virtual machine.

In some embodiments, the second electronic device may further query and determine a new address of a referenced code object through relocation based on the reference relationship between the code objects, to complete processing of the reference relationship between the code objects, thereby implementing cross-device migration of an application environment of the entire application B.

For example, in the scenario shown in FIG. 4A-1 and FIG. 4A-2, the first electronic device 100 detects the operation performed by the user on the application migration control 41, and determines that the user indicates to migrate the currently displayed first application. The first electronic device 100 generates a snapshot file of the first application at the current moment in a manner of compositing snapshots in which a Snapshot snapshot is generated from data and a code object in the high-level programming language in the first application, and a Snapshot snapshot is generated after data and a code object in the low-level programming language in the first application are compiled into data and a code object in the WASM format. Then, the first electronic device 100 sends the snapshot file to the second electronic device 200. After receiving the snapshot file, the second electronic device 200 reloads the data and the code object in the TS/JS format in the snapshot file into the TS/JS virtual machine, reloads the data and the code object in the WASM format into the WASM virtual machine, and processes the reference relationship between the code objects through deserialization processing, to complete reloading of the application runtime environment of the first application. Then, as shown in FIG. 4A-1 and FIG. 4A-2, the second electronic device 200 may continue to display the first application, and the user may continue to operate the first application on the second electronic device 200.

In this way, during application migration based on a Snapshot snapshot, the second electronic device can directly read data and a code object from a snapshot file, so that time overheads of creating the code object are saved, to accelerate startup of a virtual machine. Compared with application migration based on status node information in the conventional technology, in the application migration method provided in this application, the first electronic device does not need to record detailed information about a to-be-migrated page, so that a migration rate is effectively improved, and application migration efficiency is improved.

In addition, compared with application migration based on status node information in the conventional technology, in the application migration method provided in this application, the second electronic device does not need to restore a page status based on the status node information. In this way, an application can be migrated on any node in a manner of a Snapshot snapshot, and application migration efficiency can be improved.

Finally, in the conventional technology, in order to complete migration of an application, in an application development process, a developer needs to develop, based on an application framework and a distributed scenario, a corresponding interface of the application framework for each page that may need to be migrated in the application. According to the application migration method provided in this application, a unified distributed application development framework is established by using a high-level programming language Snapshot snapshot and a WASM Snapshot snapshot, and the first application can be migrated based on a serialization interface and a deserialization interface. This effectively reduces application development difficulty.

Optionally, FIG. 7 is a schematic flowchart of an application migration method according to an embodiment of this application. As shown in FIG. 7, the method includes the following steps.

S701: A first electronic device determines, in response to a first operation of a user, to migrate a first application to a second electronic device, where the first application includes a first code object coded in a first programming language and/or a second code object coded in a second programming language.

The first operation is, for example, a plurality of operations such as an operation on a preset control, a gesture operation, and a voice operation. For example, the first electronic device detects an operation performed by the user on an application migration control, and determines that the user indicates to migrate the first application corresponding to the application migration control to the second electronic device.

Optionally, the second electronic device is an electronic device to which the first electronic device migrates the first application by default. Alternatively, the second electronic device is an electronic device selected by the user for migrating the first application.

In some embodiments, the first programming language is, for example, a high-level programming language like a TS/JS language. The second programming language is, for example, a low-level programming language (Native) like C/C++. The first application may be coded in one or more programming languages. Optionally, the first code object is, for example, a code object coded in a TS/JS language, and the second code object is, for example, a code object coded in a native language.

For example, as shown in FIG. 4A-1 and FIG. 4A-2, in a process of displaying the first application, the first electronic device 100 detects an operation performed by the user on an application migration control 41, and determines that the user indicates to migrate the currently displayed first application. Then, the first electronic device 100 may migrate the first application to the second electronic device 200.

For another example, as shown in FIG. 4B-1 and FIG. 4B-2, the first electronic device 100 displays a multi-task interface in response to an operation of the user. On the multi-task interface, the first electronic device 100 detects an operation performed by the user on a migration control 42, determines a card corresponding to the migration control 42, and determines that the user indicates to migrate the first application corresponding to the card. Then, the first electronic device 100 may migrate the first application to the second electronic device 200.

S702: The first electronic device generates a first snapshot file corresponding to the first code object, and/or compiles a second code object in a first format into a second code object in a second format and generates a second snapshot file corresponding to the second code object in the second format.

Optionally, the first snapshot file is a Snapshot snapshot, and the second snapshot file is a WASM Snapshot snapshot.

In some embodiments, the first snapshot file further includes first data written in the first programming language, and the second snapshot file further includes second data written in the second programming language.

For example, there is primitive data that remains unchanged before and after migration of the first application. For the primitive data that remains unchanged before and after the migration, the first electronic device may directly write the data into a snapshot file in a manner of an input stream.

Optionally, the TS/JS language is used as an example, and types of the primitive data are basic data types, for example, including the following six types: number, string, null, undefined, Boolean, and symbol.

In some embodiments, after detecting the first operation, the first electronic device may determine the first code object corresponding to a first interface currently displayed by the first application, to generate the first snapshot file corresponding to the first code object, and determine the second code object in the first format corresponding to the first interface currently displayed by the first application, to generate the second snapshot file corresponding to the second code object.

Optionally, after detecting the first operation that the user indicates to migrate the first application, the first electronic device may determine a display interface of the to-be-migrated first application, where the display interface corresponds to a plurality of code objects. Different code objects in a virtual machine correspond to different memory regions, and the memory region may store data used to display the display interface of the first application. An electronic device traverses from a root code object to a subcode object based on a tree structure, and may determine a plurality of code objects.

For example, the first electronic device performs serialization processing on the TS/JS code object (namely, the first code object) by using a snapshot technology, to generate the first snapshot file.

For another example, the first electronic device compiles the second code object in the first format into the second code object in the second format, and then processes the second code object in the second format to generate the second snapshot file. For example, the first electronic device compiles the second code object in the first format into a second code object in a WASM format by using a first tool. Then, the first electronic device performs serialization processing on the second code object in the WASM format, to generate the second snapshot file.

For example, for a native language, there is no virtual machine similar to that for a high-level language to allocate and manage a code object, and code objects in a native runtime environment have different addresses in different processes of different electronic devices. In this case, a new address of the code object in the native runtime environment cannot be found through redirecting based on object information stored in a snapshot file during deserialization. Therefore, the first electronic device cannot directly generate, by using the snapshot technology, a snapshot file corresponding to a code object coded in the native language. In this case, the first electronic device may first compile the code object coded in the native language into a code object in a WASM format, and then generate, by using the snapshot technology, a snapshot file corresponding to the compiled code object in the WASM format.

In some embodiments, the first snapshot file further includes a first reference relationship of the first code object to the second code object in the second format, and the second snapshot file further includes a second reference relationship of the second code object in the second format to the first code object.

For example, a code object coded in the native language may reference a code object coded in the TS/JS language. Therefore, in a process of compiling a code object coded in the native language into a code object in the WASM format and generating a snapshot file, the first electronic device may further generate, based on a reference relationship of a part of the code object coded in the native language to the code object coded in the TS/JS language, a reference relationship of the code object in the WASM format corresponding to the part of the code object coded in the native language to the code object coded in the TS/JS language. In addition, the first electronic device may also generate a reference relationship of a part of the code object coded in the TS/JS language to the code object coded in the native language. Correspondingly, in a process of generating a file snapshot, the first electronic device generates a reference relationship of the part of the code object coded in the TS/JS language to the code object in the WASM format, and stores the reference relationship in the snapshot file.

Subsequently, in a process of restoring a runtime environment of the first application based on the snapshot file, the second electronic device may restore the first reference relationship and the second reference relationship, to ensure normal running of the first application.

S703: The first electronic device sends the first snapshot file and/or the second snapshot file to the second electronic device.

In some embodiments, after determining the first snapshot file and/or the second snapshot file corresponding to the first application, the first electronic device may send the first snapshot file and/or the second snapshot file to the second electronic device. Correspondingly, the second electronic device receives the first snapshot file and/or the second snapshot file.

S704: The second electronic device decodes the first snapshot file to obtain the first code object, and/or decodes the second snapshot file to obtain the second code object.

The first code object and the second code object correspond to different coding languages.

In some embodiments, the second electronic device decodes the first snapshot file to obtain the first data written in the first programming language, and/or decodes the second snapshot file to obtain the second data written in the second programming language.

In some embodiments, the second electronic device decodes the obtained first snapshot file and/or second snapshot file in a deserialization manner, to obtain a code object and data that are included in the snapshot file, thereby implementing migration of the first application.

In some embodiments, snapshot files received by the first electronic device include the first snapshot file and the second snapshot file, and the second snapshot file includes the second code object in the second format. Then, the second electronic device reconstructs the first reference relationship of the first code object included in the first snapshot file to the second code object in the second format, and reconstructs the second reference relationship of the second code object that is in the second format and that is included in the second snapshot file to the first code object.

S705: The second electronic device displays the first application.

In some embodiments, after decoding the first snapshot file and/or the second snapshot file, the second electronic device may display the migrated first application. In this way, the first application in the first electronic device is migrated to the second electronic device, so that it is convenient for the user to continue to operate the first application on the second electronic device.

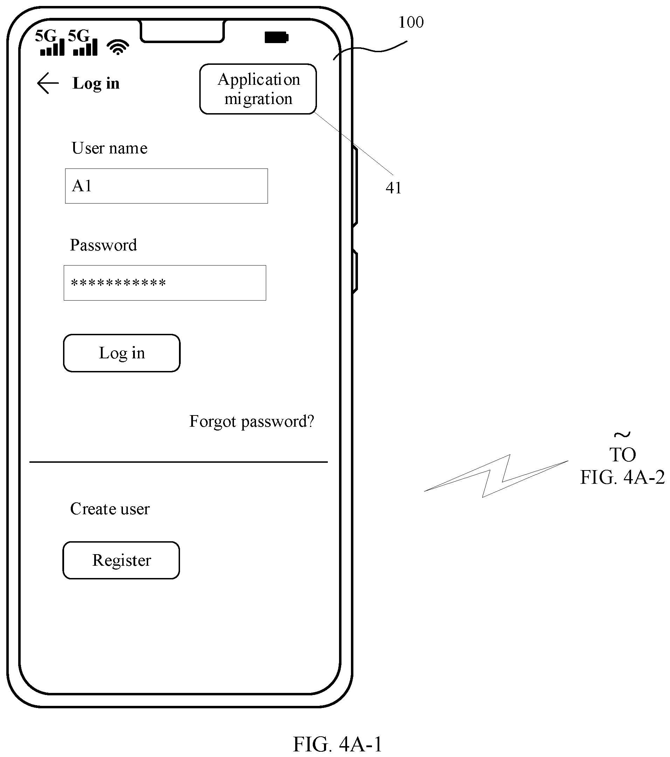

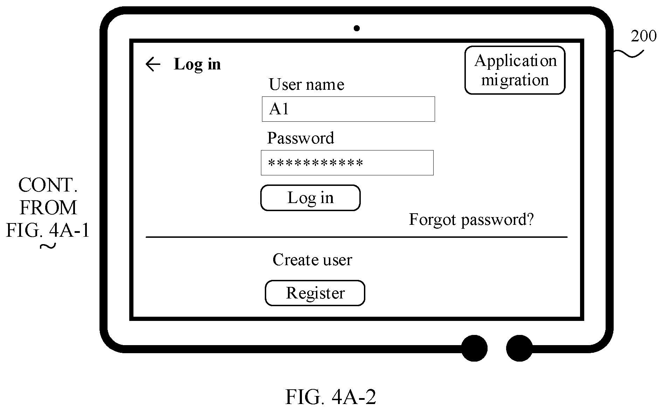

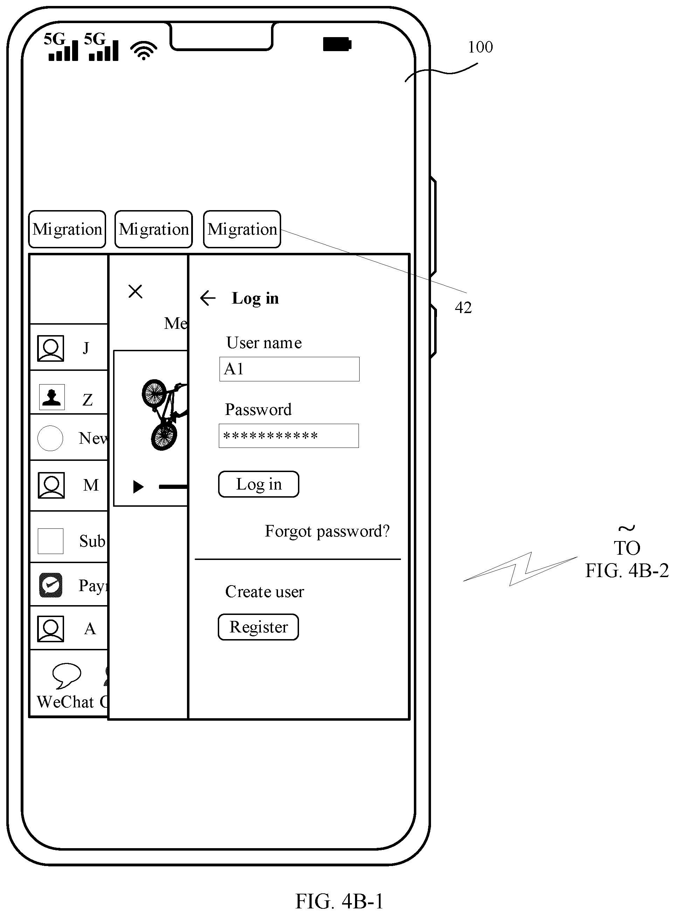

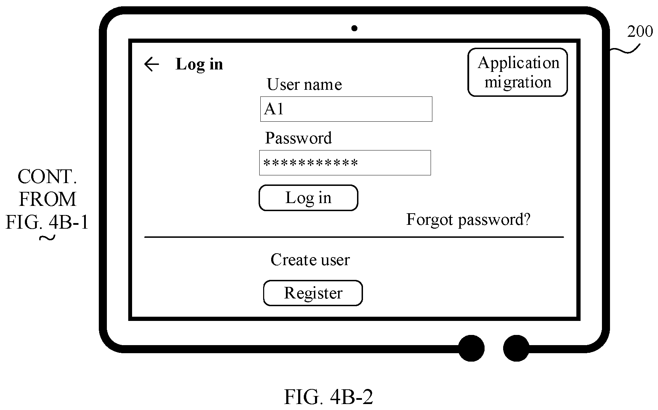

For example, in the scenario shown in FIG. 4A-1 and FIG. 4A-2, in response to the first operation, the first electronic device 100 generates a snapshot file (for example, including the first snapshot file and the second snapshot file) of the first application at a current moment in a manner of compositing snapshots in which a Snapshot snapshot is generated from data and a code object in the high-level programming language in the currently displayed first application, and a Snapshot snapshot is generated after data and a code object in the low-level programming language in the first application are compiled into data and a code object in the WASM format. Then, the first electronic device 100 sends the snapshot file to the second electronic device 200. After receiving the snapshot file, the second electronic device 200 reloads the data and the code object in the TS/JS format in the snapshot file into the TS/JS virtual machine, reloads the data and the code object in the WASM format into the WASM virtual machine, and processes the reference relationship between the code objects through deserialization processing, to complete reloading of the application runtime environment of the first application. Then, as shown inFIG. 4A-1 and FIG. 4A-2, the second electronic device 200 may continue to display the first application, and the user may continue to operate the first application on the second electronic device 200.

In this way, during application migration based on a snapshot file, the second electronic device can directly read a code object from the snapshot file, so that time overheads of creating the code object are saved, to accelerate startup of a virtual machine. Compared with application migration based on status node information in the conventional technology, in the application migration method provided in this application, the first electronic device does not need to record detailed information about a to-be-migrated page, so that a migration rate is effectively improved, and application migration efficiency is improved.

In addition, compared with application migration based on status node information in the conventional technology, in the application migration method provided in this application, the second electronic device does not need to restore a page status based on the status node information. In this way, an application can be migrated on any node in a manner of a snapshot file, and application migration efficiency can be improved.

Finally, in the conventional technology, in order to complete migration of an application, in an application development process, a developer needs to develop, based on an application framework and a distributed scenario, a corresponding interface of the application framework for each page that may need to be migrated in the application. According to the application migration method provided in this application, a unified distributed application development framework is established in a manner of a high-level programming language composite snapshot, and the first application can be migrated based on a serialization interface and a deserialization interface. This effectively reduces application development difficulty.

The foregoing describes in detail the application migration method provided in embodiments of this application with reference toFIG. 4A-1 and FIG. 4A-2to FIG. 7. The following describes in detail an electronic device provided in embodiments of this application with reference to FIG. 8 and FIG. 9.

In a possible design, FIG. 8 is a diagram of a structure of a first electronic device according to an embodiment of this application. As shown in FIG. 8, a first electronic device 800 may include a transceiver unit 801 and a processing unit 802. The first electronic device 800 may be configured to implement functions of the first electronic device in the foregoing method embodiments.

Optionally, the transceiver unit 801 is configured to support the first electronic device 800 in performing S701 and S703 in FIG. 7.

Optionally, the processing unit 802 is configured to support the first electronic device 800 in performing S701 and S702 in FIG. 7.

The transceiver unit may include a receiving unit and a sending unit, may be implemented by a transceiver or a transceiver-related circuit component, and may be a transceiver or a transceiver module. Operations and/or functions of the units in the first electronic device 800 are separately intended to implement corresponding procedures of the application migration method in the foregoing method embodiments. All related content of the steps in the foregoing method embodiments may be referenced to function descriptions of corresponding functional units. For brevity, details are not described herein again.

Optionally, the first electronic device 800 shown in FIG. 8 may further include a storage unit (not shown in FIG. 8), and the storage unit stores a program or instructions. When the transceiver unit 801 and the processing unit 802 execute the program or the instructions, the first electronic device 800 shown in FIG. 8 may perform the application migration method in the foregoing method embodiments.

For technical effects of the first electronic device 800 shown in FIG. 8, refer to the technical effects of the application migration method in the foregoing method embodiments. Details are not described herein again.

In addition to being in a form of the first electronic device 800, the technical solutions provided in this application may also be a functional unit or a chip in the first electronic device, or an apparatus that matches the first electronic device for use.

In a possible design, FIG. 9 is a diagram of a structure of a second electronic device according to an embodiment of this application. As shown in FIG. 9, a second electronic device 900 may include a transceiver unit 901, a processing unit 902, and a display unit 903. The second electronic device 900 may be configured to implement functions of the second electronic device in the foregoing method embodiments.

Optionally, the transceiver unit 901 is configured to support the second electronic device 900 in performing S703 in FIG. 7.

Optionally, the processing unit 902 is configured to support the second electronic device 900 in performing S704 in FIG. 7.

Optionally, the display unit 903 is configured to support the second electronic device 900 in performing S705 in FIG. 7.

The transceiver unit may include a receiving unit and a sending unit, may be implemented by a transceiver or a transceiver-related circuit component, and may be a transceiver or a transceiver module. Operations and/or functions of the units in the second electronic device 900 are separately intended to implement corresponding procedures of the application migration method in the foregoing method embodiments. All related content of the steps in the foregoing method embodiments may be referenced to function descriptions of corresponding functional units. For brevity, details are not described herein again.

Optionally, the second electronic device 900 shown in FIG. 9 may further include a storage unit (not shown in FIG. 9), and the storage unit stores a program or instructions. When the transceiver unit 901, the processing unit 902, and the display unit 903 execute the program or the instructions, the second electronic device 900 shown in FIG. 9 may perform the application migration method in the foregoing method embodiments.

For technical effects of the second electronic device 900 shown in FIG. 9, refer to the technical effects of the application migration method in the foregoing method embodiments. Details are not described herein again.

In addition to being in a form of the second electronic device 900, the technical solutions provided in this application may also be a functional unit or a chip in the second electronic device, or an apparatus that matches the second electronic device for use.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the application migration method in the foregoing embodiments.

An embodiment of this application further provides a computer program product. When the computer program product runs on a computer, the computer is enabled to perform the foregoing related steps, to implement the application migration method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the application migration method in the foregoing method embodiments.

The apparatus, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

The method or algorithm steps described in combination with the content disclosed in embodiments of this application may be implemented in a hardware manner, or may be implemented in a manner of executing software instructions by a processor. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or a storage medium of any other form well known in the art. For example, a storage medium is coupled to a processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

The foregoing descriptions of implementations allow a person skilled in the art to clearly understand that, for a purpose of convenient and brief description, division into the foregoing functional modules is merely used as an example for illustration. During actual application, the foregoing functions may be allocated to different functional modules for implementation based on a requirement. That is, an inner structure of an apparatus is divided into different functional modules, to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed method may be implemented in another manner. The apparatus embodiments described above are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electrical, mechanical, or other forms.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application migration method, applied to a first electronic device, wherein the method comprises:
determining, in response to a first operation of a user, to migrate a first application to a second electronic device, wherein the first application comprises a first code object coded in a first programming language and/or a second code object coded in a second programming language;
generating a first snapshot file corresponding to the first code object, and/or
compiling a second code object in a first format into a second code object in a second format and generating a second snapshot file corresponding to the second code object in the second format; and
sending the first snapshot file and/or the second snapshot file to the second electronic device.

2. The method according to claim 1, wherein the first snapshot file further comprises first data written in the first programming language, and the second snapshot file further comprises second data written in the second programming language.

3. The method according to claim 1 or 2, wherein before the generating a first snapshot file corresponding to the first code object, the method further comprises:
determining the first code object corresponding to a first interface currently displayed by the first application.

4. The method according to any one of claims 1 to 3, wherein the compiling a second code object in a first format into a second code object in a second format comprises:
compiling the second code object in the first format into a second code object in a WebAssembly WASM format by using a first tool.

5. The method according to claim 4, wherein before the compiling a second code object in a first format into a second code object in a second format, the method further comprises:
determining the second code object in the first format corresponding to the first interface currently displayed by the first application.

6. The method according to any one of claims 1 to 5, wherein the first snapshot file is a Snapshot snapshot, and the second snapshot file is a WASM Snapshot snapshot.

7. The method according to any one of claims 1 to 6, wherein the first snapshot file further comprises a first reference relationship of the first code object to the second code object in the second format, and the second snapshot file further comprises a second reference relationship of the second code object in the second format to the first code object.

8. An application migration method, applied to a second electronic device, wherein the method comprises:
receiving a first snapshot file and/or a second snapshot file sent by a first electronic device, wherein the first file snapshot and the second file snapshot correspond to a first application in the first electronic device;
decoding the first snapshot file to obtain a first code object, and/or decoding the second snapshot file to obtain a second code object, wherein the first code object and the second code object correspond to different coding languages; and
displaying the first application.

9. The method according to claim 8, wherein before the displaying the first application, the method further comprises:
decoding the first snapshot file to obtain first data written in a first programming language, and/or decoding the second snapshot file to obtain second data written in a second programming language.

10. The method according to claim 8 or 9, wherein snapshot files received by the first electronic device comprise the first snapshot file and the second snapshot file, and the second snapshot file comprises a second code object in a second format; and before the displaying the first application, the method further comprises:
reconstructing a first reference relationship of the first code object comprised in the first snapshot file to the second code object in the second format, and reconstructing a second reference relationship of the second code object that is in the second format and that is comprised in the second snapshot file to the first code object.

11. The method according to any one of claims 8 to 10, wherein the first snapshot file is a Snapshot snapshot, and the second snapshot file is a WebAssembly WASM Snapshot snapshot.

12. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 7.

13. An electronic device, comprising a processor, a memory, and a display, wherein the memory, the display, and the processor are coupled, the memory is configured to store computer program code, the computer program code comprises computer instructions, and when the processor reads the computer instructions from the memory, the electronic device is enabled to perform the method according to any one of claims 8 to 11.

14. A computer-readable storage medium, wherein the computer-readable storage medium comprises a computer program, and when the computer program is run on an electronic device, the electronic device is enabled to perform the method according to any one of claims 1 to 7, or the electronic device is enabled to perform the method according to any one of claims 8 to 11.

15. A computer program product, wherein when the computer program product runs on a computer, the computer is enabled to perform the method according to any one of claims 1 to 7, or the computer is enabled to perform the method according to any one of claims 8 to 11.
